(19) Europäisches Patentamt
European Patent Office
Office européen des brevets

(11) Veröffentlichungsnummer: **0 673 973 A1**

# (12) EUROPÄISCHE PATENTANMELDUNG

(21) Anmeldenummer: **95103935.3**

(22) Anmeldetag: **17.03.95**

(51) Int. Cl.6: **C08L 71/12**, C08L 81/02, C08L 81/06

(30) Priorität: **26.03.94 DE 4410661**
**14.06.94 DE 4420643**

(43) Veröffentlichungstag der Anmeldung:
**27.09.95 Patentblatt 95/39**

(84) Benannte Vertragsstaaten:
**BE DE FR GB NL**

(71) Anmelder: **BASF AKTIENGESELLSCHAFT**

**D-67056 Ludwigshafen (DE)**

(72) Erfinder: **Weber, Martin, Dr.**
**Eckstrasse 19**
**D-67433 Neustadt (DE)**
Erfinder: **Eberle, Wolfgang, Dr.**
**Am Hemel 20**
**D-55124 Mainz (DE)**

(54) **Mischungen auf der Basis von Polyarylenethern und Polyarylensulfiden.**

(57) Formmassen aus Polyarylenethern mit Hydroxyendgruppen, Polyarylenethern mit Endgruppen, die keine Hydroxygruppen sind, Polyarylensulfiden sowie darüber hinaus faser- oder teilchenförmigen Füllstoffen, schlagzähmodifizierenden Kautschuken und Zusatzstoffe oder Verarbeitungshilfsmittel, sowie deren Verwendung.

EP 0 673 973 A1

Die vorliegende Erfindung betrifft Formmassen aus

A) 1 bis 20 Gew.-% Polyarylenethern, in denen mindestens 0,03 Gew.-% Hydroxyendgruppen, bezogen auf das Molekulargewicht $M_n$ (Zahlenmittelwert) der Polyarylenether, sind und die wiederkehrende Einheiten der allgemeinen Formel I

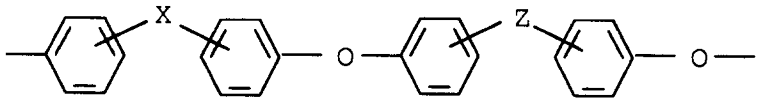

(I)

oder entsprechenden mit $C_1$- bis $C_6$-Alkyl-, $C_1$- bis $C_6$-Alkoxy, Aryl-, Chlor oder Fluor kernsubstituierten Einheiten, wobei

X -$SO_2$-, -SO-, -O-, CO, -N = N-, -RC = $CR^{a-}$, -$CR^bR^c$- oder eine chemische Bindung sein kann und

Z ausgewählt ist aus -$SO_2$-, -SO-, CO, -N = N- und -RC = $CR^a$-, wobei

R und $R^a$ jeweils Wasserstoff oder eine $C_1$- bis $C_6$-Alkylgruppe darstellen,

$R^b$ und $R^c$ jeweils Wasserstoff oder eine $C_1$- bis $C_6$-Alkyl-, $C_4$- bis $C_{10}$-Cycloalkyl-, $C_1$- bis $C_6$-Alkyl-, $C_4$- bis $C_{10}$-Cycloalkyl-, $C_1$- bis $C_6$-Alkoxy- oder Arylgruppe oder jeweils deren Fluor- oder Chlorderivate sein können

enthalten und

B) 5 bis 95 Gew.-% Polyarylenethern, in denen weniger als 0,03 Gew.-% Hydroxygruppen, bezogen auf das Molekulargewicht $M_n$ (Zahlenmittelwert) der Polyarylenether, sind,

C) 4 bis 94 Gew.-% Polyarylensulfiden,

D) 0 bis 60 Gew.-% faser- oder teilchenförmiger Füllstoffe,

E) 0 bis 45 Gew.-% schlagzähmodifizierender Kautschuke und

F) 0 bis 40 Gew.-% Zusatzstoffen oder Verarbeitungshilfsmitteln.

Darüber hinaus betrifft die vorliegende Erfindung die Verwendung dieser Formmassen sowie Formkörper, Fasern oder Folien aus diesen Formmassen.

Mischungen aus den hochtemperaturbeständigen Polyarylenethern und Polyarylensulfiden sind an sich bekannt und weisen gegenüber den Einzelkomponenten z.B. verbesserte mechanische Eigenschaften und höhere Chemikalienbeständigkeit auf.

Es sind auch Blends bekannt, die neben Polyarylensulfiden Polyarylenether enthalten, die Hydroxygruppen tragen. So sind in der GB-A-2 113 235 Materialien für Beschichtungen aus Polyarylensulfiden und Hydroxygruppen-enthaltenden Polysulfonen erwähnt, wobei die Hydroxygruppen zur Vernetzung der Beschichtung dienen. Die japanische Offenlegungsschrift JP-A 299 872/89 lehrt, daß Mischungen aus Polyarylensulfonen mit Hydroxyendgruppen und Polyarylensulfiden dann verbesserte mechanische Eigenschaften aufweisen, wenn der Natriumionengehalt der Polyarylensulfidkomponente gering ist. Dabei ist die Reinigung der Polyarylensulfide aufwendig.

Aufgabe der vorliegenden Erfindung war es Mischungen auf der Basis von Polyarylenethern und Polyarylensulfiden zu entwickeln, die bei Einsatz kommerziell erhältlicher, nicht vorgereinigter Polyarylensulfide neben verbesserten mechanischen Eigenschaften und Chemikalienbeständigkeiten verbessertes thermoplastisches Verarbeitungsverhalten aufweisen.

Diese Aufgabe wird von den eingangs definierten erfindungsgemäßen Formmassen gelöst.

Komponente A

Die erfindungsgemaßen Formmassen enthalten als Komponente A 1 bis 20, bevorzugt 2 bis 15 Gew.-% Polyarylenether, in denen mindestens 0,03 Gew.-% Hydroxyendgruppen, bezogen auf das Molekulargewicht $M_n$ (Zahlenmittelwert) der Polyarylenether, sind. Insbesondere sind die Polyarylenether A in Mengen von 3 bis 14 Gew.-% in den erfindungsgemaßen Formmassen enthalten.

Als Komponente A werden Polyarylenether mit wiederholten Strukturelementen

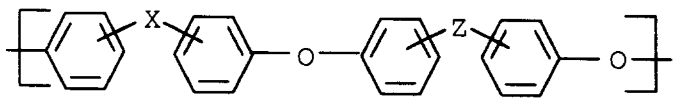 (I)

eingesetzt. Ebenso können deren kernsubstituierte Derivate verwendet werden. Als Substituenten kommen vorzugsweise $C_1$-$C_6$-Alkyl, wie Methyl, Ethyl, n-Propyl, i-Propyl, n-Butyl, i-Butyl oder t-Butyl, $C_1$-$C_6$-Alkoxy, wie Methoxy oder Ethoxy, Aryl, insbesondere Phenyl, Chlor oder Fluor in Betracht. Die Variable X kann $-SO_2-$, -SO-, -O-, -CO-, -N=N-, $-RC=CR^a-$, $-CR^bR^c-$ oder eine chemische Bindung sein. Die Variable Z kann für $-SO_2-$, -SO-, -N=N- oder $-RC=CR^a$, stehen. Hierbei stellen R und $R^a$ jeweils Wasserstoff, $C_1$-$C_6$-Alkyl, z.B. Methyl, Ethyl, n-Propyl i-Propyl oder n-Hexyl, $C_1$-$C_6$-Alkoxy, darunter Methoxy, Ethoxy, n-Propoxy, i-Propoxy, oder n-Butoxy, oder Aryl, insbesondere Phenyl dar. Die Reste $R^b$ und $R^c$ können jeweils Wasserstoff oder eine $C_1$- bis $C_6$-Alkylgruppe, insbesondere Methyl, darstellen. Sie können aber auch zu einem $C_4$- bis $C_{10}$-Cycloalkylring wie Cyclopentyl- oder Cyclohexyl- miteinander verknüpft sein, der seinerseits mit einer oder mehreren Alkylgruppen, vorzugsweise Methyl substituiert sein kann. Daneben können $R^b$ und $R^c$ auch eine $C_1$- bis $C_6$-Alkoxygruppe, z.B. Methoxy oder Ethoxy oder eine Arylgruppe, besonders Phenyl, darstellen. Die vorgenannten Gruppen können ihrerseits jeweils mit Chlor oder Fluor substituiert sein.

Die Molekulargewichte (Zahlenmittel $\overline{M}_n$) geeigneter Polyarylenether A liegen im allgemeinen im Bereich von 1500 bis 60 000 g/mol.

Zu den geeigneten Polyarylenethern A zählen auch Copolymere aufgebaut aus Polyarylenethersegmenten und Struktureinheiten ausgewählt aus der Gruppe der Polyester, aromatischen Polycarbonate, Polyestercarbonate, Polysiloxane, Polyimide, Polyamidimide und Polyetherimide. Die Molekulargewichte $\overline{M}_w$ der Polyaryletherblöcke bzw. der Polyaryletherpfropfarme in derartigen Copolymeren liegen im allgemeinen im Bereich von 1000-30000 g/mol. Die Blöcke unterschiedlicher Struktur können in den Copolymeren alternierend oder statistisch angeordnet sein. Der Gewichtsanteil der Polyarylenether in den Copolymeren beträgt im allgemeinen 3 bis 97, vorzugsweise 10 bis 90 und insbesondere 20 bis 80 Gew.-%.

Es können auch Mischungen verschiedener Polyarylenether A verwendet werden.

Einige geeignete wiederkehrende Einheiten sind im folgenden aufgeführt:

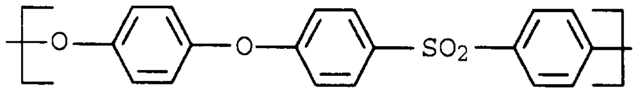
$(I_1)$

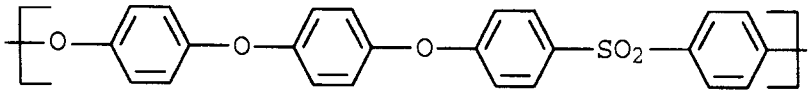
$(I_2)$

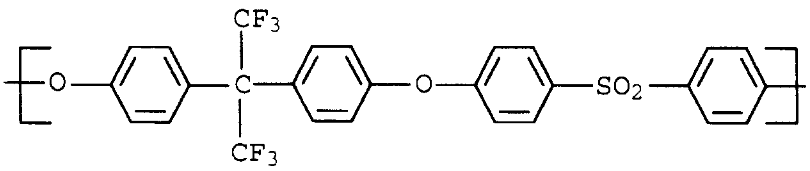
$(I_3)$

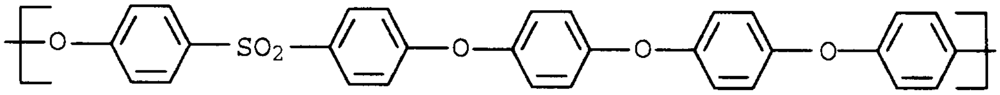
$(I_4)$

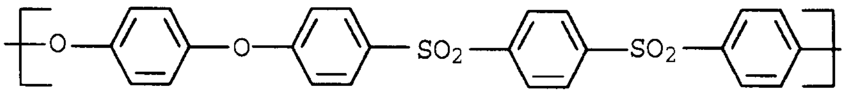
$(I_5)$

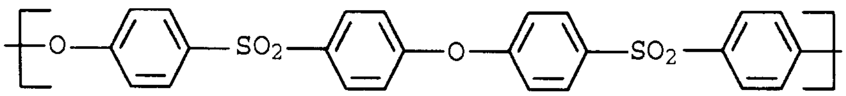
$(I_6)$

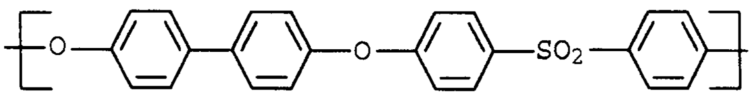
$(I_7)$

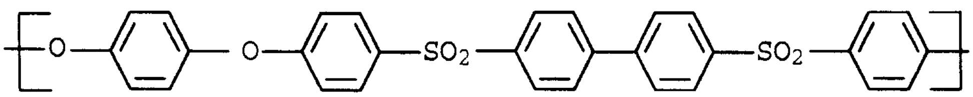
$(I_8)$

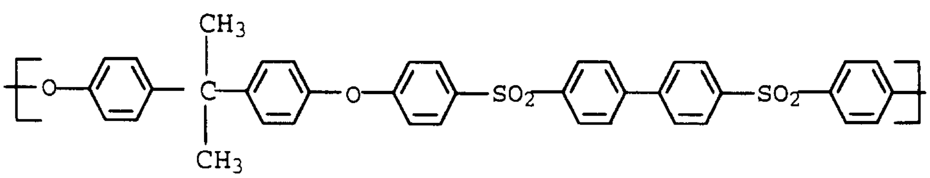
$(I_9)$

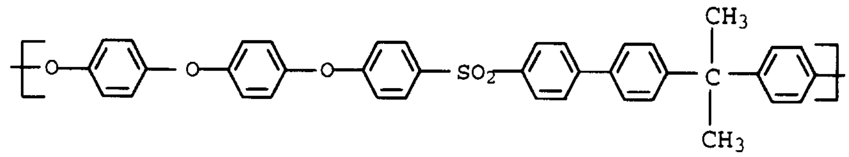
(I10)

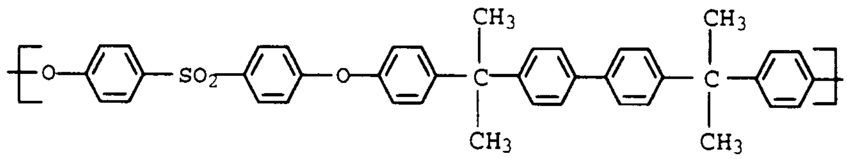
(I11)

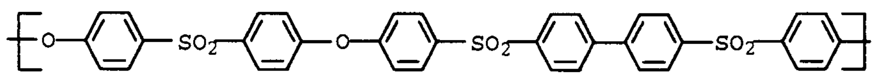
(I12)

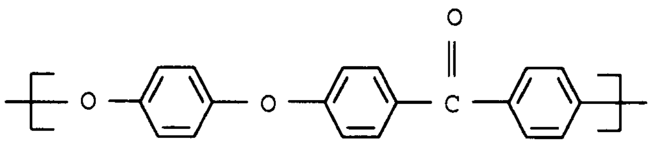
(I13)

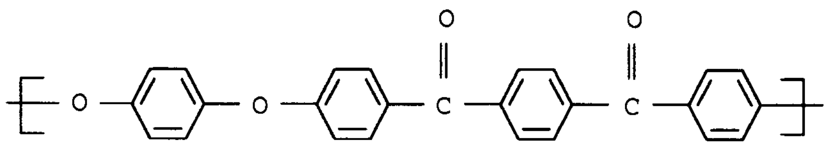
(I14)

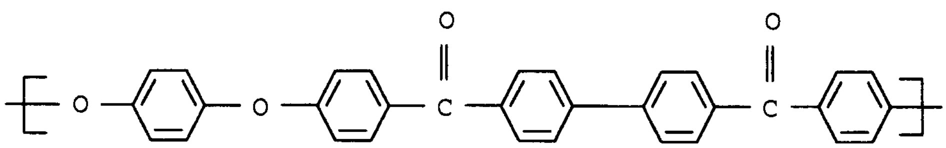
(I15)

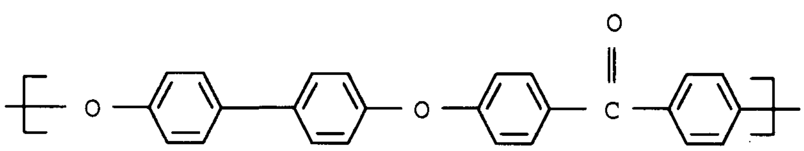
(I16)

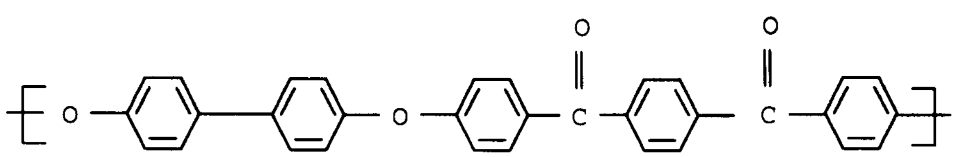
(I17)

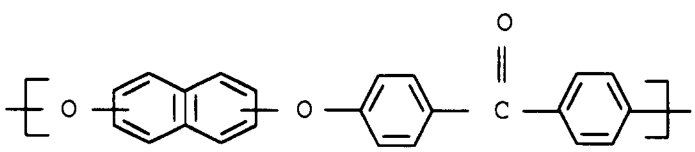
(I18)

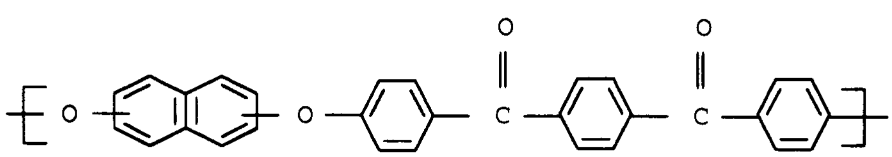
(I19)

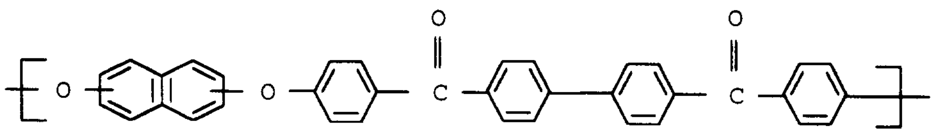

(I20)

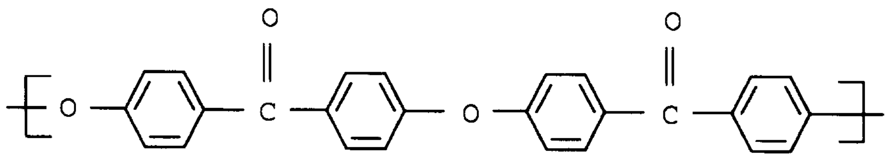

(I21)

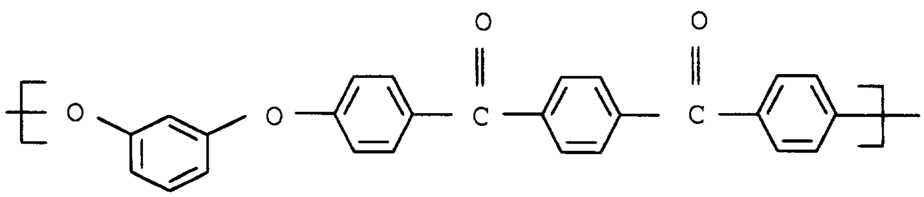

(I22)

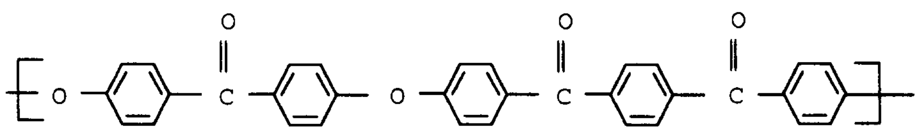

(I23)

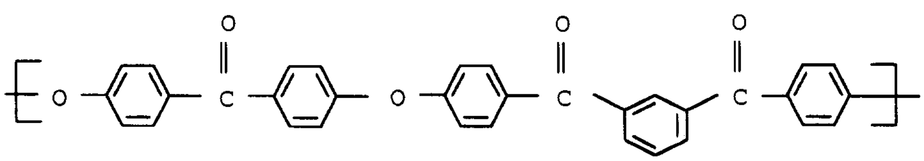

(I24)

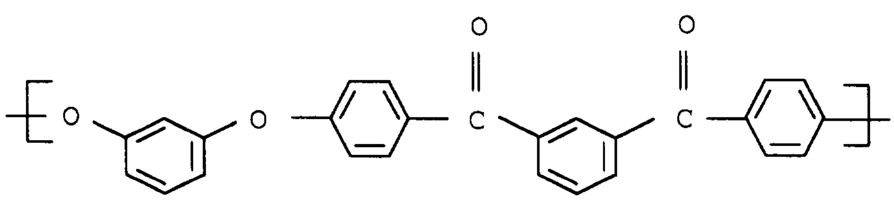

(I25)

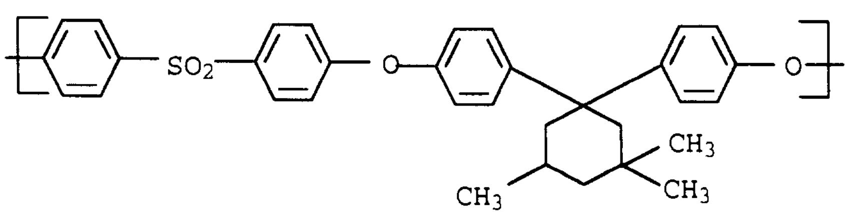

(I26)

Zu den besonders bevorzugten Polyarylenethern A zählen solche mit

$a_1$) 0 bis 100 Mol-% wiederkehrenden Einheiten

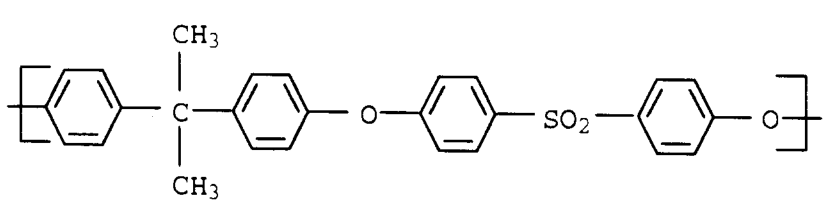

(II)

und

$a_2$) 0 bis 100 Mol-% wiederkehrenden Einheiten

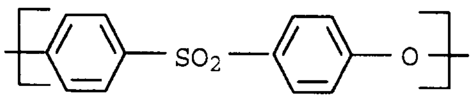

(III),

wobei sich die Molprozentangabe auf den Gehalt an $SO_2$-Gruppen bezieht. Besonders bevorzugt werden Polyarylenether A mit 3 bis 97 Mol-% wiederkehrenden Einheiten (II) und 3 bis 97 Mol-% wiederkehrenden Einheiten (III).

Die Herstellung von Polyarylenethern ist allgemein bekannt (vgl. z.B. GB 1 152 035; US 4 870 153; WO 84 03891), ebenso die Herstellung von Polyarylenethern mit Blockstruktur (DE 37 42 264). Methoden zur Synthese von Copolymeren sind z.B. bei A. Noshay et al. Block Copolymers, Academic Press, 1977, beschrieben.

Besonders geeignet ist die Umsetzung von monomeren Dihydroxy- mit Dihalogenverbindungen in aprotischen polaren Lösungsmitteln in Gegenwart von wasserfreiem Alkalicarbonat. Eine besonders bevorzugte Kombination ist N-Methylpyrrolidon als Lösungsmittel und Kaliumcarbonat als Base oder die Umsetzung in der Schmelze. Daneben eignet sich die Umsetzung von Säurechloriden mit aromatischen Verbindungen mit abstrahierbaren Wasserstoffatomen in Gegenwart von Lewissäuren wie Aluminiumtrichlorid.

Polyarylenether A mit Hydroxyendgruppen können beispielsweise durch geeignete Wahl des molaren Verhältnisses zwischen Dihydroxy- und Dichlormonomeren hergestellt werden (siehe z.B. McGrath et al Polym. Eng. Sci. 17, 647 (1977); Elias "Makromoleküle" 4. Aufl. (1981) Seiten 490 bis 493, Hütig & Wepf.-Verlag, Basel).

Bevorzugt werden Polyarylenether A verwendet, die einen Hydroxyendgruppengehalt von 0,03 bis 2 Gew.-%, bezogen auf das Molekulargewicht $M_n$ (Zahlenmittelwert) der Polyarylenether, haben. Besonders bevorzugt werden Polyarylenether A mit 0,05 bis 2 Gew.-%, insbesondere 0,1 bis 1,5 Gew.-% Hydroxyendgruppen.

Komponente B

Neben den Polyarylenethern A können die erfindungsgemäßen Formmassen 5 bis 95 Gew.-% Polyarylenether B enthalten, in denen weniger als 0,03, bevorzugt 0,025 Gew.-%, bezogen auf das Molekulargewicht $M_n$ (Zahlenmittelwert) der Polyarylenether, Hydroxygruppen sind. Bevorzugt sind die Polyarylenether B von 8 bis 93 Gew.-%, insbesondere von 10 bis 91 Gew.-% in den erfindungsgemäßen Formmassen enthalten.

Zu den bevorzugten Polyarylenethern B zählen solche mit wiederkehrenden Einheiten der allgemeinen Formel III

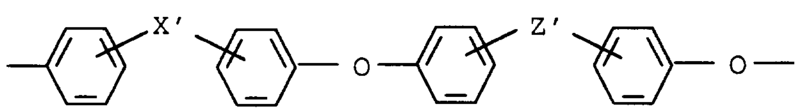

(III)

worin X' und Z' die gleiche Bedeutung haben wie X und Z. Ebenso wie die Polyarylenether A können auch die Polyarylenether B Co- oder Blockcopolymere sein, wobei die Struktureinheiten ausgewählt sind aus der unter A angegebenen Gruppe.

In den erfindungsgemäßen Formmassen können Polyarylenether B verwendet werden, die sich in ihrer Kettenstruktur von der der Polyarylenether A unterscheiden. Es können auch Mischungen unterschiedlicher Polyarylenether B eingesetzt werden. Vorzugsweise werden Polyarylenether B verwendet, die aus den gleichen wiederkehrenden Einheiten aufgebaut sind wie die Polyarylenether A. Ganz besonders bevorzugt werden Polyarylenether B, die 0 bis 100 Mol-% wiederkehrende Einheiten II und 0 bis 100 Mol-% wiederkehrende Einheiten III enthalten.

Im allgemeinen weisen die Polyarylenether B mittlere Molekulargewichte und relative Viskositäten im unter A angegebenen Bereich auf.

Die Polyarylenether B können als Endgruppen beispielsweise Halogen-, Methoxy-, Phenoxy-, Benzyloxy- oder Aminoendgruppen enthalten.

Komponente C

Polyarylensulfide sind eine weitere wesentliche Komponente der erfindungsgemäßen Formmassen. Sie betragen von 4 bis 94 Gew.-%. Bevorzugt enthalten die erfindungsgemäßen Formmassen von 5 bis 90, insbesondere von 6 bis 87 Gew.-% Polyarylensulfide.

Als Komponente C können prinzipiell alle Polyarylensulfide eingesetzt werden. Bevorzugt werden jedoch Polyarylensulfide, die mehr als 30 Mol-%, insbesondere mehr als 70 Mol-% wiederkehrende Einheiten

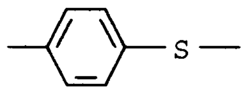 (IV)

enthalten. Als weitere wiederkehrende Einheiten sind beispielsweise

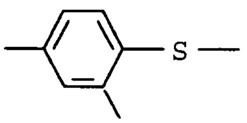 , 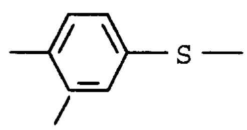 , 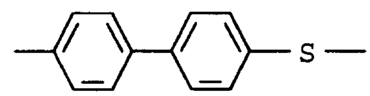 ,

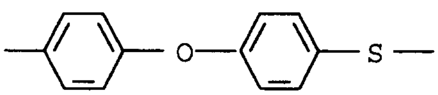 oder 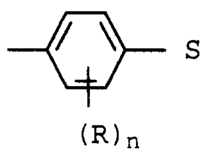

worin R einen $C_1$- bis $C_{10}$-Alkylrest, bevorzugt Methyl und n entweder 1 oder 2 bedeutet, zu nennen. Die Polyarylenethersulfide können sowohl statistische Copolymere als auch Blockcopolymere sein. Ganz besonders bevorzugte Polyphenylensulfide enthalten 100 mol-% Einheiten IV.

Als Endgruppen kommen z.B. Halogen, Thiol oder Hydroxy, bevorzugt Halogen in Betracht.

Die bevorzugten Polyarylensulfide weisen von 1000 bis 100 000 g/mol auf.

Polyarylensulfide sind an sich bekannt oder nach bekannten Methoden erhältlich. Beispielsweise können sie wie in der US-A 2 513 188 beschrieben durch Umsetzen von Halogenaromaten mit Schwefel oder Metallsulfiden hergestellt werden. Ebenso ist es möglich Metallsalze von mit Halogen substitutierten Thiophenolen zu erhitzen (siehe GB-B 962 941). Zu den bevorzugten Synthesen von Polyarylensulfiden zählt die Umsetzung von Alkalimetallsulfiden mit Halogenaromaten in Lösung, wie sie z.B. aus der US 3 354 129 zu entnehmen ist.

Komponente D

Neben den Komponenten A bis C können die erfindungsgemäßen Formmassen noch Verstärkungsmittel oder Füllstoffe enthalten. Als Komponente C können die erfindungsgemäßen Formmassen z.B. bis 60, bevorzugt bis 45, vorzugsweise 10 bis 35 Gew.-% faser- oder teilchenförmige Füllstoffe oder Verstärkungsstoffe oder deren Mischungen enthalten.

Bevorzugte faserförmige Füll- oder Verstärkungsstoffe sind Kohlenstoffasern, Kaliumtitanatwhisker, Aramidfasern und besonders bevorzugt Glasfasern. Bei der Verwendung von Glasfasern können diese zur besseren Verträglichkeit mit dem Matrixmaterial mit einer Schlichte und einem Haftvermittler ausgerüstet sein. Im allgemeinen haben die verwendeten Kohlenstoff- und Glasfasern einen Durchmesser im Bereich von 6 bis 20 µm.

Die Einarbeitung der Glasfasern kann sowohl in Form von Kurzglasfasern als auch in Form von Endlossträngen (Rovings) erfolgen. Im fertigen Spritzgußteil liegt die mittlere Länge der Glasfasern vorzugsweise im Bereich von 0,08 bis 0,5 mm.

Kohlenstoff- oder Glasfasern können auch in Form von Geweben, Matten oder Glasseidenrovings eingesetzt werden.

Als teilchenförmige Füllstoffe eignen sich vor allem amorphe Kieselsäure, Magnesiumcarbonat (Kreide), gepulverter Quarz, Glimmer, Talkum, Feldspat, Glaskugeln und insbesondere Calciumsilikate wie Wollastonit und Kaolin (insbesondere kalzinierter Kaolin).

Bevorzugte Kombinationen von Füllstoffen sind z.B. 20 Gew.-% Glasfasern mit 15 Gew.-% Wollastonit und 15 Gew.-% Glasfasern mit 15 Gew.-% Wollastonit.

Komponente E

Die erfindungsgemäßen Formmassen können außerdem 0 bis 45, vorzugsweise 0 bis 30 Gew.-% schlagzähmodifizierender Kautschuke enthalten. Dabei eignen sich insbesondere solche, die Polyarylenether und/oder Polyarylensulfide schlagzäh modifizieren können.

Als Kautschuke, die die Zähigkeit der Blends erhöhen, seien z.B. folgende genannt:

EP- bzw. EPDM-Kautschuke, die mit funktionellen Gruppen gepfropft wurden. Geeignete Pfropfreagentien sind beispielsweise Maleinsäureanhydrid, Itaconsäure, Acrylsäure, Glycidylacrylat und Glycidylmethacrylat.

Diese Monomeren können in der Schmelze oder in Lösung, gegebenenfalls in Gegenwart eines Radikalstarters wie Cumolhydroperoxid auf das Polymere aufgepfropft werden.

Weiterhin seien Copolymere von $\alpha$-Olefinen genannt. Bei den $\alpha$-Olefinen handelt es sich üblicherweise um Monomere mit 2 bis 8 C-Atomen, vorzugsweise Ethylen und Propylen. Als Comonomere haben sich Alkylacrylate oder Alkylmethacrylate, die sich von Alkoholen mit 1 bis 8 C-Atomen, vorzugsweise von Ethanol, Butanol oder Ethylhexanol, ableiten sowie reaktive Comonomere wie Acrylsäure, Methacrylsäure, Maleinsäure, Maleinsäureanhydrid oder Glycidyl(meth-)acrylat und weiterhin Vinylester, insbesondere Vinylacetat, als geeignet erwiesen. Mischungen verschiedener Comonomere können ebenfalls eingesetzt werden. Als besonders geeignet haben sich Copolymere des Ethylens mit Ethyl- oder Butylacrylat und Acrylsäure und/oder Maleinsäureanhydrid erwiesen.

Die Copolymeren können in einem Hochdruckprozeß bei einem Druck von 400 bis 4500 bar oder durch Pfropfen der Comonomeren auf das Poly-$\alpha$-Olefin hergestellt werden. Der Anteil des $\alpha$-Olefins an dem Copolymeren liegt i.a. im Bereich von 99,95 bis 55 Gew.-%.

Als weitere Gruppe von geeigneten Elastomeren sind Kern-Schale-Pfropfkautschuke zu nennen. Hierbei handelt es sich um in Emulsion hergestellte Pfropfkautschuke, die aus mindestens einem harten und einem weichen Bestandteil bestehen. Unter einem harten Bestandteil versteht man üblicherweise ein Polymerisat mit einer Glastemperatur von mindestens 25 °C, unter einem weichen Bestandteil ein Polymerisat mit einer Glastemperatur von höchstens 0 °C. Diese Produkte weisen eine Struktur aus einem Kern und mindestens einer Schale auf, wobei sich die Struktur durch die Reihenfolge der Monomerzugabe ergibt. Die weichen Bestandteile leiten sich i.a. von Butadien, Isopren, Alkylacrylaten, Alkylmethacrylaten oder Siloxanen und gegebenenfalls weiteren Comonomeren ab. Geeignete Siloxankerne können beispielsweise ausgehend von cyclischen oligomeren Octamethyltetrasiloxan oder Tetravinyltetramethyltetrasiloxan hergestellt werden. Diese können beispielsweise mit $\gamma$-Mercaptopropylmethyldimethoxysilan in einer ringöffnenden kationischen Polymerisation, vorzugsweise in Gegenwart von Sulfonsäuren, zu den weichen Siloxankernen umgesetzt werden. Die Siloxane können auch vernetzt werden, indem z.B. die Polymerisationsreaktion in Gegenwart von Silanen mit hydrolysierbaren Gruppen wie Halogen oder Alkoxygruppen wie Tetraethoxysilan, Methyltrimethoxysilan oder Phenyltrimethoxysilan durchgeführt wird. Als geeignete Comonomere sind hier z.B. Styrol, Acrylnitril und vernetzende oder pfropfaktive Monomere mit mehr als einer polymerisierbaren Doppelbindung wie Diallylphthalat, Divinylbenzol, Butandioldiacrylat oder Triallyl(iso)cyanurat zu nennen. Die harten Bestandteile leiten sich i.a. von Styrol, $\alpha$-Methylstyrol und deren Copolymerisaten ab, wobei hier als Comonomere vorzugsweise Acrylnitril, Methacrylnitril und Methylmethacrylat aufzuführen sind.

Bevorzugte Kern-Schale-Pfropfkautschuke enthalten einen weichen Kern und eine harte Schale oder einen harten Kern, eine erste weiche Schale und mindestens eine weitere harte Schale. Der Einbau von funktionellen Gruppen wie Carbonyl-, Carbonsäure, Säureanhydrid-, Säureamid-, Säureimid-, Carbonsäureester-, Amino-, Hydroxyl-, Epoxi-, Oxazolin-, Urethan-, Harnstoff-, Lactam- oder Halogenbenzylgruppen, erfolgt hierbei vorzugsweise durch den Zusatz geeigneter funktionalisierter Monomere bei der Polymerisation der letzten Schale. Geeignete funktionalisierte Monomere sind beispielsweise Maleinsäure, Maleinsäureanhydrid, Mono- oder Diester der Maleinsäure, tertiär-Butyl(meth-)acrylat, Acrylsäure, Glycidyl(meth-)acrylat und Vinyloxazolin. Der Anteil an Monomeren mit funktionellen Gruppen beträgt i.a. 0,1 bis 25 Gew.-%, vorzugsweise 0,25 bis 15 Gew.-%, bezogen auf das Gesamtgewicht des Kern-Schale-Pfropfkautschuks. Das Gewichtsverhältnis von weichen zu harten Bestandteilen beträgt i.a. 1:9 bis 9:1, bevorzugt 3:7 bis 8:2.

Derartige Kautschuke sind an sich bekannt und beispielsweise in der EP-A 208 187 beschrieben.

Eine weitere Gruppe von geeigneten Schlagzähmodifiern sind thermoplastische Polyester-Elastomere. Unter Polyesterelastomeren werden dabei segmentierte Copolyetherester verstanden, die langkettige Segmente, die sich in der Regel von Poly(alkylen)etherglycolen und kurzkette Segmente, die sich von niedermolekularen Diolen und Dicarbonsäuren ableiten, enthalten. Derartige Produkte sind an sich bekannt und in der Literatur, z.B. in der US-A 3 651 014, beschrieben. Auch im Handel sind entsprechende Produkte unter den Bezeichnungen Hytrel® (Du Pont), Arnitel® (Akzo) und Pelprene® (Toyobo Co. Ltd.) erhältlich.

Selbstverständlich können auch Mischungen verschiedener Kautschuke eingesetzt werden.

Komponente F

Neben den beschriebenen Bestandteilen A bis D können die erfindungsgemäßen Formmassen noch 0 bis 40 Gew.-% Flammschutzmittel, Pigmente und Stabilisatoren enthalten.

Die erfindungsgemäßen Formmassen können nach an sich bekannten Verfahren, beispielsweise Extrusion, hergestellt werden.

Die erfindungsgemäßen Formmassen können z.B. hergestellt werden, indem man die Ausgangskomponenten in üblichen Mischvorrichtungen wie Schneckenextrudern vorzugsweise Zweischneckenextrudern, Brabender-Mühlen oder Banburry-Mühlen sowie Knetern mischt und anschließend extrudiert. Nach der Extrusion wird das Extrudat abgekühlt und zerkleinert.

Die Reihenfolge der Mischung der Komponenten kann variiert werden, so können zwei oder ggf. drei Komponenten vorgemischt werden, es können aber auch alle Komponenten gemeinsam gemischt werden.

Um eine möglichst homogene Formmasse zu erhalten, ist eine intensive Durchmischung vorteilhaft. Dazu sind im allgemeinen mittlere Mischzeiten von 0,2 bis 30 Minuten bei Temperaturen von 250 bis 400 °C, bevorzugt 280 bis 380 °C, erforderlich. Nach der Extrusion wird das Extrudat in der Regel abgekühlt und zerkleinert.

Die erfindungsgemäßen Formmassen lassen sich thermoplastisch verarbeiten. Sie zeichnen sich durch gute Steifigkeit bei gleichzeitig guten Fließfähigkeiten und Verarbeitungsstabilitäten aus. Die erfindungsgemäßen Formmassen eignen sich vor allem zur Herstellung von Haushaltsgeräten oder Geräten für den medizinischen Sektor. Sie können jedoch auch auf dem Elektro- oder Elektronikbereich eingesetzt werden. Neben Formkörpern können auch Folien oder Fasern aus den erfindungsgemäßen Formmassen hergestellt werden.

Beispiele

Anwendungstechnische Prüfungen

Die Viskositätszahl (VZ) wurde jeweils in 1 gew.-%iger Lösung eines 1:1-Gemisches aus Phenol und 1,2-Dichlorbenzol bei 25 °C bestimmt.

Die Hydroxy-Endgruppengehalte wurden durch potentiometrische Titration ermittelt. Die Berechnung der Gewichtsprozente der Hydroxyendgruppen erfolgte, indem das durch die Titration ermittelte Gewicht der Hydroxygruppen (in Gramm) durch die jeweilige Einwaage der Polyarylenethersulfone (in Gramm) geteilt und mit 100 multipliziert wurde.

Die Wärmeformbeständigkeit der Proben wurde mittels der Vicat-Erweichungstemperatur ermittelt. Die Vicat-Erweichungstemperatur wurde nach DIN 53 460, mit einer Kraft von 49,05 N und einer Temperatursteigerung von 50 K je Stunde, an Normkleinstäben ermittelt.

Der E-Modul wurde im Zugversuch nach DIN 53 455 an Schulterstäben ermittelt. Die Fließfähigkeit (MVI) wurde nach DIN 53 735 bei einer Temperatur von 320 °C und einer Belastung von 21,6 kg bestimmt.

Die Schädigungsarbeit Ws wurde bei unverstärkten Proben an Rundscheiben nach DIN 53 443 ermittelt. Die Schlagzähigkeit verstärkter Proben wurde nach DIN 53 453 an Normkleinstäben bestimmt.

Die Verarbeitungsstabilität der Proben wurde anhand der Veränderung der Fließfähigkeit der Schmelzen nach 5 und 25 Minuten Standzeit der Schmelze ($\Delta$ MVI = [$MVI_{5'}$ - $MVI_{25'}$]/$MVI_{5'}$ • 100 % bei 380 °C und einer Belastung von 5 kg beurteilt.

Die Wasseraufnahme der Proben wurde an Schulterstäben, die 14 Tage in siedendem Wasser gelagert waren, bestimmt Gewichtszunahme in %).

Blendkomponenten

Komponente $A_1$

Polyarylenether aus 4,4'-Dihydroxydiphenylsulfon und 4,4'-Dichlordiphenylsulfon mit einer VZ von 57 ml/g und 0,12 Gew.-% OH-Endgruppen.

Komponente $B_1$

Polyarylenether aus 4,4'-Dihydroxydiphenylsulfon und 4,4'-Dichlordiphenylsulfon, charakterisiert durch eine VZ von 59 ml/g (z.B. Handelsprodukt Ultrason E der Firma BASF).

Komponente $C_1$

Polyphenylensulfid, charakterisiert durch ein E-Modul von 3200 $N/mm^2$ (z.B. Handelsprodukt Fortron 0214 der Firma Hoechst).

Komponente $D_1$

Glasfaserroving einer Dicke von 10 µm aus E-Glas, die mit einer Schlichte aus Polyurethan ausgerüstet waren. Nach dem Einarbeiten lagen die mittleren Längen der Glasfaser etwa zwischen 0,1 und 0,5 mm.

Die Komponenten wurden in einem Zweiwellenextruder bei einer Massetemperatur von 300 bis 350 °C gemischt. Die Schmelze wurde durch ein Wasserbad geleitet und granuliert.

Das getrocknete Granulat wurde bei 310 bis 340 °C zu Normkleinstäben, Schulterstäben und Rundscheiben verarbeitet.

Die Zusammensetzung der Formmassen und die Ergebnisse der anwendungstechnischen Prüfungen sind den Tabellen 1 und 2 zu entnehmen.

Tabelle 1: Unverstärkte Formmassen

| Komponenten | Beispiel Nr. | | | | | | |
|---|---|---|---|---|---|---|---|
| | $V_1$ | $V_2$ | $V_3$ | $V_4$ | 1 | 2 | $V_5$ |
| $A_1$ | - | - | - | 0,5 | 5 | 14 | 25 |
| $B_1$ | 100 | - | 80 | 79,5 | 75 | 66 | 55 |
| $C_1$ | - | 100 | 20 | 20 | 20 | 20 | 20 |
| Eigenschaften | | | | | | | |
| Vicat B [°C] | 216 | >250 | 215 | 215 | 215 | 215 | 215 |
| E-Modul [N/mm²] | 2700 | 3200 | 2900 | 2900 | 2880 | 2800 | 2750 |
| $W_s$ [Nm] | 70 | 0,5 | 23 | 22 | 68 | 65 | 70 |
| MVI [ml/10'] | 54 | <250 | 108 | 110 | 111 | 113 | 114 |
| ΔMVI | 2 | 70 | 22 | 10 | 14 | 14 | 37 |
| Wasseraufnahme [%] | 1,9 | 0,1 | 1,4 | 1,4 | 1,4 | 1,4 | 1,4 |

$V_1$ bis $V_5$: Vergleichsversuche

Die Versuche 1 und 2 zeigen, daß Formmassen, die die Komponente A nicht enthalten, schlechte Werte für die Schädigungsarbeit aufweisen; wird der Anteil der Komponente A zu groß resultiert daraus eine Verschlechterung der Verarbeitungsstabilität. Nur die erfindungsgemäßen Zusammensetzungen weisen ein ausgewogendes Eigenschaftsprofil auf.

Tabelle 2: Verstärkte Formmassen

| Komponenten | Beispiel Nr. $V_6$ | $V_7$ | $V_8$ | 3 | 4 | $V_9$ |
|---|---|---|---|---|---|---|
| $A_1$ | - | - | - | 5 | 14 | 25 |
| $B_1$ | - | 70 | 49 | 44 | 35 | 24 |
| $C_1$ | 70 | - | 21 | 21 | 21 | 21 |
| $D_1$ | 30 | 30 | 30 | 30 | 30 | 30 |
| Eigenschaften | | | | | | |
| Vicat B [°C] | >250 | 222 | 221 | 222 | 221 | 222 |
| E-Modul [N/mm²] | 12200 | 8850 | 10300 | 10250 | 10300 | 10300 |
| $a_n$ [kJ/m²] | 26,0 | 22,5 | 22,1 | 25,4 | 29,4 | 31,0 |
| MVI [ml/10'] | 190 | 20 | 63 | 64 | 63 | 65 |
| ΔMVI [%] | 120 | 16 | 35 | 21 | 22 | 72 |
| Wasseraufnahme [%] | 0,1 | 1,3 | 0,8 | 0,8 | 0,8 | 0,8 |

$V_6$ bis $V_9$: Vergleichsversuche

Die erfindungsgemäßen Formmassen zeichnen sich durch verbesserte Fließfähigkeit, erhöhte Steifigkeit und verbesserte Zähigkeit aus. Außerdem ist die Verarbeitungsstabilität deutlich verbessert.

**Patentansprüche**

1. Formmassen aus

A) 1 bis 20 Gew.-% Polyarylenethern, in denen mindestens 0,03 Gew.-% Hydroxyendgruppen, bezogen auf das Molekulargewicht $M_n$ (Zahlenmittelwert) der Polyarylenether, sind und die wiederkehrende Einheiten der allgemeinen Formel I

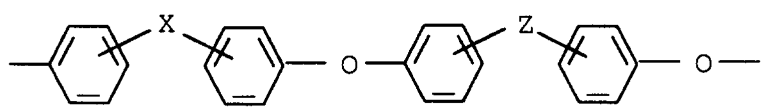 (I)

oder entsprechenden mit $C_1$- bis $C_6$-Alkyl-, $C_1$- bis $C_6$-Alkoxy, Aryl-, Chlor oder Fluor kernsubstituierten Einheiten, wobei

| | |
|---|---|
| X | $-SO_2-$, -SO-, -O-, CO, -N=N-, $-RC=CR^{a-}$, $-CR^bR^c-$ oder eine chemische Bindung sein kann und |
| Z | ausgewählt ist aus<br>$-SO_2-$, -SO-, CO,<br>-N=N- und $-RC=CR^a-$,<br>wobei |
| R und $R^a$ | jeweils Wasserstoff oder eine $C_1$- bis $C_6$-Alkylgruppe darstellen, |
| $R^b$ und $R^c$ | jeweils Wasserstoff oder eine $C_1$- bis $C_6$-Alkyl-, $C_4$- bis $C_{10}$-Cycloalkyl-, $C_1$- bis $C_6$-Alkyl-, $C_4$- bis $C_{10}$-Cycloalkyl-, $C_1$- bis $C_6$-Alkoxy- oder Arylgruppe oder jeweils deren Fluor- oder Chlorderivate sein können |

enthalten und

B) 5 bis 95 Gew.-% Polyarylenethern, in denen weniger als 0,03 Gew.-% Hydroxygruppen, bezogen auf das Molekulargewicht $M_n$ (Zahlenmittelwert) der Polyarylenether, sind,

C) 4 bis 94 Gew.-% Polyarylensulfiden,

D) 0 bis 60 Gew.-% faser- oder teilchenförmiger Füllstoffe,

E) 0 bis 45 Gew.-% schlagzähmodifizierender Kautschuke und

F) 0 bis 40 Gew.-% Zusatzstoffen oder Verarbeitungshilfsmitteln.

2. Formmassen nach Anspruch 1, in denen die Polyarylenether A

$a_1$) 0 bis 100 Mol-% wiederkehrende Einheiten

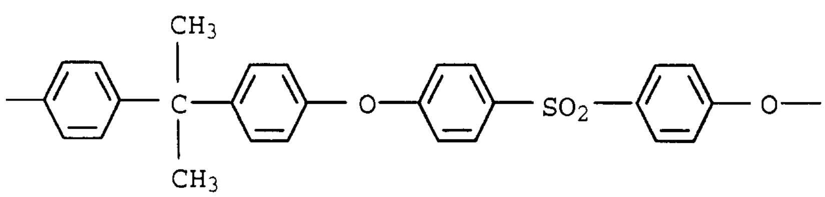 (II)

und

$a_2$) 0 bis 100 Mol-% wiederkehrende Einheiten

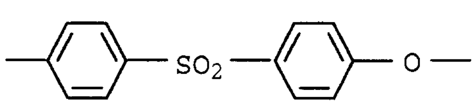 (III)

enthalten.

3. Formmassen nach Anspruch 1 oder 2, in denen die Polyarylenether A einen Hydroxyendgruppengehalt von 0,05 bis 2 Gew.-%, bezogen auf das Molekulargewicht $M_n$ (Zahlenmittelwert), enthalten.

**4.** Formmassen nach einem der Ansprüche 1 bis 3, in denen die Polyarylenether B
$b_1$) 0 bis 100 Mol-% wiederkehrende Einheiten II und
$b_2$) 0 bis 100 Mol-% wiederkehrende Einheiten III enthalten.

**5.** Formmassen nach einem der Ansprüche 1 bis 4, in denen die Polyarylensulfide wiederkehrende Einheiten

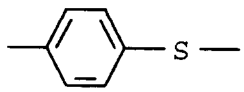

(IV)

enthalten.

**6.** Verwendung der Formmassen gemäß einem der Ansprüche 1 bis 5 zur Herstellung von Formkörpern, Fasern oder Filmen.

**7.** Formkörper, Fasern oder Filme hergestellt unter Verwendung der Formmassen gemäß einem der Ansprüche 1 bis 5.

Europäisches Patentamt

# EUROPÄISCHER RECHERCHENBERICHT

Nummer der Anmeldung
EP 95 10 3935

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| D,A | DATABASE WPI<br>Section Ch, Week 9003<br>Derwent Publications Ltd., London, GB;<br>Class A26, AN 90-019559<br>& JP-A-01 299 872 ( TORAY IND INC) ,<br>4.Dezember 1989<br>* Zusammenfassung *<br>--- | 1-7 | C08L71/12<br>C08L81/02<br>C08L81/06 |
| A | EP-A-0 530 442 (MITSUBISHI PETROCHEMICAL CO)<br>* Seite 7, Zeile 47 - Zeile 51; Anspruch 1; Beispiele 10,22 *<br>* Seite 16, Zeile 53 - Zeile 58 *<br>--- | 1-7 | |
| A | EP-A-0 472 960 (MITSUBISHI PETROCHEMICAL CO)<br>* Seite 7, Zeile 2 - Zeile 6; Beispiel 5 *<br>--- | 1-7 | |
| A | DE-A-39 39 761 (BAYER AG)<br>* Ansprüche; Beispiel 5 *<br>--- | 1-7 | **RECHERCHIERTE SACHGEBIETE (Int.Cl.6)** |
| A | EP-A-0 241 019 (PHILLIPS PETROLEUM CO)<br>* Ansprüche; Tabellen 1,2 *<br>--- | 1-7 | C08L |
| A | EP-A-0 418 719 (BASF AG)<br>* Ansprüche *<br>----- | 1-7 | |

Der vorliegende Recherchenbericht wurde für alle Patentansprüche erstellt

| Recherchenort | Abschlußdatum der Recherche | Prüfer |
|---|---|---|
| BERLIN | 10.Juli 1995 | Boeker, R |

**KATEGORIE DER GENANNTEN DOKUMENTE**

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P04C03)